## Europäisches Patentamt

(19) **European Patent Office**

**Office européen des brevets**

(11) Publication number: **0 211 523**
**B1**

(12) **EUROPEAN PATENT SPECIFICATION**

(45) Date of publication of the patent specification: **25.10.89**

(21) Application number: **86305216.3**

(22) Date of filing: **04.07.86**

(51) Int. Cl.⁴: **B01D 53/22, C01B 21/04**

(54) Inert gas generation.

(30) Priority: **01.08.85 GB 8519348**
**11.09.85 GB 8522525**
**20.09.85 GB 8523285**
**16.10.85 GB 8525511**

(43) Date of publication of application:
**25.02.87 Bulletin 87/9**

(45) Publication of the grant of the patent:
**25.10.89 Bulletin 89/43**

(84) Designated Contracting States:
**DE GB NL**

(56) References cited:
**EP-A- 0 024 718**
**EP-A- 0 082 600**
**US-A- 4 370 150**

(73) Proprietor: **Humphreys & Glasgow Limited, Chestergate House 253 Vauxhall Bridge Road, London SW1V 1HD(GB)**

(72) Inventor: **Horton, Anthony, 7 Handside Lane, Welwyn Garden City Herts. AL8 6SE(GB)**
Inventor: **Griffiths, John, The Ark 7 Westview Road, Warlingham Surrey CR3 9JD(GB)**
Inventor: **Masson, John Richard, 54 Tudor Drive Otford, Nr. Sevenoaks Kent TN14 5QR(GB)**

(74) Representative: **Wise, Stephen James et al, c/o RAWORTH, MOSS & COOK 36 Sydenham Road, Croydon, Surrey CR0 2EF(GB)**

## Description

The present invention relates to a process for the generation of inert gas, particularly for injecting into an oil well to assist in the recovery of crude oil.

It is a well known feature of oilfields that as the oil is extracted the pressure in a field decreases. Initially when the pressure is high the oil will flow out by the expansion of gas which is in the field with the oil - the so called "associated gas". As more and more oil is extracted the pressure falls, and in order to maintain the flow of oil additional recovery techniques such as the injection of water or inert gases are used.

If the oilfield is onshore a number of options are open such as steam flooding, fire flooding, or water flooding. However, if the field is offshore the size and weight of such oil recovery equipment become very important considerations. This invention seeks to provide a process for the production of nitrogen which can be used for oil recovery. Although particularly suitable for offshore operation, the process of the invention may also be used onshore.

In accordance with the present invention a process for recovering nitrogen at supra-atmospheric pressure from a nitrogen-containing gas stream comprising:

(a) compressing the gas stream to supra-atmospheric pressure;

(b) passing the compressed stream through a gas permeable membrane which exhibits enhanced permeability towards impurities in the nitrogen stream than towards nitrogen itself whereby to separate at least some of the nitrogen in the stream from the impurities therein, such that the permeate stream is substantially above atmospheric pressure;

(c) passing the nitrogen separated in step (b) through a catalytic deoxygenation device to remove oxygen therefrom;

(d) increasing the temperature of the separated stream of impurities from step (b); and

(e) expanding the hot impurities stream to produce work.

In the preferred embodiment the nitrogen-containing gas stream is air, and the membrane exhibits enhanced permeability towards oxygen. In practice often only about one half of the nitrogen in the air which is compressed in step (a) ends up as useful nitrogen product for well injection. Desirably the increase in temperature achieved in step (d) is at least partly effected by the combustion of a fuel with the oxygen of the impurities stream.

The nitrogen separated in step (b) is passed through a catalytic deoxygenation device to remove oxygen therefrom, and preferably the heat generated by this catalytic deoxygenation used to increase the temperature of the separated impurities stream in step (d). Furthermore trace amounts of impurities in the recovered nitrogen can be removed using a molecular sieve gas separation device, e.g. a pressure swing adsorption unit. Such impurities can be sulphur dioxide, water vapour and residual carbon dioxide.

Usually the process includes the step or cooling the separated nitrogen, the heat recovered being used to increase the temperature of the separated impurities stream in step (d). Also the step of compressing the separated nitrogen from step (b) is usually needed when the nitrogen is used in oil recovery.

Although useful in any part of the overall process, preferably the work produced in step (e) is utilised to assist in the compression either or the gas stream in step (a) or of the recovered nitrogen.

In conventional practice, gas permeable membrane devices are operated so as to produce a permeate stream at substantially atmospheric pressure. In this invention the permeate stream is maintained at a pressure substantially above atmospheric pressure. The pressure differential across the membrane used in the present process is arranged to be generally between 10 and 100 atmospheres, preferably about 70 atmospheres, with the pressure of the permeate separated in step (b) being at least 5 atmospheres absolute. ( 1 atmosphere = 0.101325 MPa)

Mostly the oilfield structures necessitate the compression of the separated nitrogen to pressures up to 500 atmospheres. For well injection the oxygen content of the recovered nitrogen should be less than 50 ppm, particularly less than 10 ppm.

The temperature of the hot impurities stream expanded in step (e) can be between 500 and 1100°C, particularly when, e.g. for offshore operation, the energy required by the recovery process is supplied by the combustion of natural gas.

The compression step (a) may be effected by a single compressor which is driven in part by the hot impurities stream expansion of step (e) and in part by another driver, e.g. a gas turbine. The compression step may alternatively be effected by several compressors and hot gas expanders arranged in series. Conveniently for each pair the required nett shaft make-up power is arranged to match that available from a commercially available aero derivative gas turbine driver. It has been found useful for the initial stages of compression to be axial and the final stage to be radial.

The gas permeable membrane may be contained within a single device, or may be used in a number or gas separation devices either arranged in series or in parallel as required. When a combination of gas separation devices is used a number or different gas flows are possible. For example, the permeate stream from a down-stream device can be recycled either to an intermediate stage on the compressor or to an up-stream gas separation device.

Referring now to the most preferred embodiment, the invention comprises the production of an inert gas which is predominantly nitrogen which is derived from air by compressing air, passing it through a permeable membrane device such as that marketed by Monsanto under the trade name of "Prism", which preferentially allows the permeation of oxygen through the membrane. The nonpermeating stream, i.e. the nitrogen-rich stream which retains substantially all its pressure, is passed to a catalytic deoxygenation device which reduces the oxygen content of the stream to a level suitable for injection into the oil well. The oxygen-rich permeating stream leaves the membrane at elevated pressure and is heated before passing through an expansion turbine.

One important factor in the production of nitrogen for enhanced oil recovery is the ratio between the quantity of nitrogen produced and the natural gas used as fuel to "drive" the flowsheet. This ratio of nitrogen/natural gas is called the "bulking factor". The fuel usage of the flowsheet is of course particularly important for onshore applications where natural gas may command a relatively high price. However, even for offshore applications where natural gas is of low value the bulking factor is still an important parameter.

The Monsanto "Prism" separator which could be one of the membrane devices utilised in the present process requires a pressure difference to permeate oxygen through its polymer membrane. Normally permeable membranes are operated so that the permeate stream leaves at a pressure close to atmospheric. However, in the preferred embodiment of this invention the feed air is passed to the Prism separator at a pressure higher than 10 ats, but generally lower than 200 ats, while maintaining a pressure differential across the membrane such as to give a permeate stream substantially above atmsopheric pressure. Typically 60 to 80 ats are applied to the high pressure side of the membrane, so as to allow the oxygen-rich permeate stream to exit the device generally at a pressure of from 2 to 50 ats, desirably between 3 and 30 and, and preferably between 5 and 20 ats (1 ats = 0.101325 MPa).

This permeate stream is headed and expanded in a device to generate shaft energy which could, e.g., drive the air compressor or $N_2$ compression or assist with the drive thereof.

Again, in a preferred embodiment, this heating is achieved by exchanging heat with a hot-nitrogen-containing stream from the de-oxo stage and by fueling the stream with natural gas in a combustion chamber immediately prior to the gas expander. However, the heat in the compressor exhaust stream could also be used. Furthermore the gas could be heated and/or expanded more than once.

Typically inlet temperatures to the gas expander may be in the range of 500 to 1100°C. The higher the temperature the better the energy efficiency of the flowsheet. However, the temperature is limited to that acceptable in commercially available expansion machinery.

This technique of raising the total pressure of the permeation device coupled with heating the permeate stream before expansion results in considerable energy saving for the total flowsheet, although to keep the installation as simple as possible when using the invention offshore, one would not normally recover heat from the gas turbine exhausts.

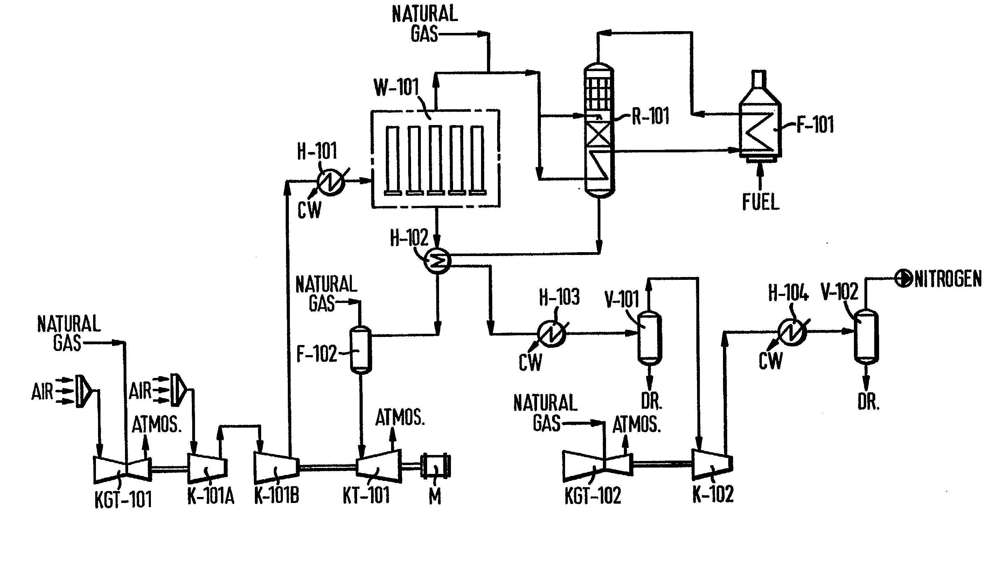

One preferred flowsheet which is the subject of this invention is shown in the single Figure, Fig. 1. Air is compressed in compressors K-101A and K-101B, each of which may be a mixed flow device consisting of axial first stages and radial final stages. For ease of start-up these two compressors are arranged to be mechanically separate. The compressed air at approximatley 80 ats is cooled in exchanger H-101 (CW stands for cooling water) before passing to the Prism permeable membrane device W-101. The effluent oxygen-rich permeate stream leaves the Prism separator at approximately 10 ats and is firstly preheated in H-102 by exchange with the hot-nitrogen-containing stream generally to a temperature in the range of 100 to 650°C, desirably between 250 and 550°C, and preferably between 350 and 450°C. The permeate stream then passes to combustion chamber F-102 where it is fired with natural gas to a temperature in the range of 500 to 1100°C. The hot gas is then expanded to atmosphere in turbine KT-101 to provide the shaft energy to drive the air compressor K-101B. The remainder of the compression of the air is effected by gas turbine KGT-101, which is preferably of the lightweight aeroderivative type suitable for offshore application, driving only compressor K-101A. Turbine KGT-101 is fuelled by natural gas and discharges direct to atmosphere. M" is an electric motor which is used to assist start-up.

The high pressure nitrogen stream leaving the Prism separator W-101 contains oxygen in the range of 1 to 10% by volume. This stream is split into two, one portion being preheated by heat exchange with effluent hot nitrogen before being passed through the first catalytic bed in de-oxo reactor R-101. (Fired heater F-101 is generally only used for startup.) Natural gas is added to both split streams to achieve deoxygenation, although it could be added only to the first, pre-heated split stream. During passage through the first de-oxo bed the temperature of the gas rises. After leaving this bed the gas stream is cooled by adding the second portion of the nitrogen feed stream before passing to the second catalytic bed, which can be the same as or different from the first bed. Final deoxygenation can be achieved down to lower than 1 ppm. The deoxygenated nitrogen leaving the reactor passes to heat exchanger H-102 to preheat the permeate stream, and is then cooled in heat exchanger H-103 before passing to final gas compressor K-102. Gas turbine KGT-102, which is fuelled by natural gas and which discharges direct to atmosphere, drives the compressor K-102. Again it could be an aeroderivative. After compression to the range of 30.4 to 50.7 MPa (300 to 500 ats), the final high pressure nitrogen is cooled in heat exchanger H-104. Knock-out pots V-101 and V-102 are provided to remove condensed moisture, "DR." meaning drain.

Removal of trace impurity gases such as water vapour, carbon dioxide and sulphur dioxide may be accomplished by conventional techniques, e.g. by the use of molecular sieve absorption. Such plant could be installed after the knock-out pot V-101 and before the final gas compressor K-102.

Whilst final oxygen concentrations lower than 1 ppm can be achieved, much higher final oxygen concentrations may be produced by the process of this invention, if required, e.g. 1 to 3% by volume.

Bulking factors achieved using the illustrated flowsheet are in the range of 7 to 10 when used to produce nitrogen at 40.5 MPa (400 ats) from atmospheric pressure air.

As an alternative to air, gas turbine exhaust or flue gas may be used as the source of nitrogen for the process of this invention.

As an alternative to natural gas, the present process may be fuelled by other suitable liquid or gaseous fuels such as oil-associated gas, natural gas liquids, kerosene or naphtha, or by a combination of such fuels.

It will be perceived by those skilled in the art that the illustrated embodiment of the present invention has significant advantages over known bulk inert gas generation techniques:-

1. Apart from the compressor, expanders and turbine drives, whose use offshore is well established, there are no significant moving parts which require maintenance.

2. A complete system incorporating the embodiment can easily be modularised and added to an existing offshore platform.

3. The system does not contain any liquid oxygen streams, which could be hazardous.

In the event that the work produced by the expansion of the hot impurities stream is not required in the present nitrogen recovery process, it can be used by the plant and equipment of neighbouring processes on the same site or offshore platform, either directly or, via the intermediate generation of electricity, indirectly.

## Claims

1. A process for recovering nitrogen at supra-atmospheric pressure from a nitrogen-containing gas stream comprising:-

(a) compressing the gas stream to supra-atmospheric pressure;

(b) passing the compressed stream through a gas permeable membrane which exhibits enhanced permeability towards impurities in the nitrogen stream than towards nitrogen itself whereby to separate at least some of the nitrogen in the stream from the impurities therein, such that the permeate stream is substantially above atmospheric pressure;

(c) passing the nitrogen separated in step (b) through a catalytic deoxygenation device to remove oxygen therefrom;

(d) increasing the temperature of the separated stream of impurities from step (b); and

(e) expanding the hot impurities stream to produce work.

2. A process as claimed in claim 1 wherein the nitrogencontaining gas stream is air, and the membrane exhibits enhanced permeability towards oxygen.

3. A process as claimed in claim 2 wherein the increase in temperature achieved in step (d) is at least partly effected by the combustion of a fuel with the oxygen of the impurities stream.

4. A process as claimed in any one of the preceding claims wherein the work produced in step (e) is utilised to assist in the compression of the gas stream in step (a).

5. A process as claimed in any one of claims 1 to 3 wherein the work produced in step (e) is utilised to assist in the compression of nitrogen recovered from step (b).

6. A process as claimed in any one of the preceding claims wherein the pressure differential across the gas permeable membrane is between 1.013 and 10.1325 MPa (10 and 100 atmospheres), and wherein the pressure of the permeate separated in step (b) is at least 0.5066 MPa (5 atmospheres) absolut.

7. A process as claimed in any one of the preceding claims wherein the compression step (a) is effected by two compressors, each being driven by a gas turbine and being mechanically separate.

8. A process as claimed in any one of the preceding claims wherein trace amounts of impurities in the recovered nitrogen are removed using a molecular sieve gas separation device.

## Patentansprüche

1. Verfahren zum Gewinnen von Stickstoff bei einem Druck oberhalb Atmosphärendruck aus einem stickstoffhaltigen Gasstrom, umfassend:

a) das Verdichten des Gasstroms auf einen Druck oberhalb Atmosphärendruck;

b) das Hindurchleiten des komprimierten Stromes durch eine gasdurchlässige Membraneinrichtung, die gegenüber Verunreinigungen im Stickstoffstrom eine erhöhte Durchlässigkeit als gegenüber Stickstoff selbst zeigt, um dadurch mindestens einen Teil des Stickstoffes im Strom von den Verunreinigungen darin zu trennen, derart, daß der Permeat-Strom sich wesentlich oberhalb von Atmosphärendruch befindet;

c) das Hindurchleiten des in Schritt b) abgetrennten Stickstoffes durch eine Einrichtung zur katalytischen Desoxidation, um Sauerstoff daraus zu entfernen;

d) das Erhöhen der Temperatur des abgetrennten Stromes an Verunreinigungen aus Schritt b);

e) das Expandieren des heißen Stromes an Verunreinigungen, um Arbeit zu erzeugen.

2. Verfahren nach Anspruch 1, bei dem der stickstoffhaltige Gasstrom Luft ist und bei dem die Membran gegenüber Sauerstoff eine erhöhte Durchlässigkeit zeigt.

3. Verfahren nach Anspruch 2, bei dem die in Schritt d) ausgeführte Temperaturerhöhung mindestens teilweise durch die Verbrennung eines Brennstoffes mit dem Sauerstoff des Stromes an Verunreinigungen vorgenommen wird.

4. Verfahren nach einem der vorhergehenden Ansprüche, bei dem die in Schritt e) erzeugte Arbeit verwendet wird, um die Komprimierung des Gasstromes in Schritt a) zu unterstützen.

5. Verfahren nach einem der Ansprüche 1 bis 3, bei dem die in Schritt e) erzeugte Arbeit verwendet wird, um die Komprimierung des aus Schritt b) gewonnenen Stickstoffes zu unterstützen.

6. Verfahren nach einem der vorhergehenden Ansprüche, bei dem der Differenzdruck an der gasdurchlässigen Membran zwischen 1,013 und 10,1325 MPa (zwischen 10 umd 100 Atmosphären) beträgt, und bei dem der Druck des in Schritt b) abgetrennten Permeats mindestens 0,5066 MPa (Atmosphären) absolut ist.

7. Verfahren nach einem der vorhergehenden Ansprüche, bei dem der Komprimierungsschritt a) durch zwei Kompressoren bewirkt wird, die jeweils durch eine Gasturbine getrieben werden und mechanisch getrennt sind.

8. Verfahren nach einem der vorhergehenden Anprüche, bei dem Spuren an Verunreinigungen im gewonnen Stickstoff durch Verwendung einer Molekularsieb-Gastrenneinrichtung entfernt werden.

**Revendications**

1. Un procédé de récuperation d'azote sous pression supra atmosphérique à partir d'un courant de gaz contenant de l'azote comprenant:
   a) la compression du courant gazeux à une pression supra atmosphérique;
   b) le passage du courant comprimé au travers d'une membrane permeable aux gaz qui présente vis-à-vis des impuretés contenues dans le courant d'azote une perméabilité supérieure à celle qu'elle présente vis-à-vis de l'azote lui même, de façon à séparer au moins une partie des impuretés contenues dans le courant d'azote et obtenir un perméat dont la pression est sensiblement supérieur à la pression atmospherique;
   c) le passage de l'azote séparé dans l'étape b) dans une installation de désoxygénation catalytique pour retirer l'oxygène qui y est contenu; l'augmentation de la température du courant d'impuretés séparé dans l'étape b)
   e) la détente du courant d'impuretés chauds pour produire du travail.

2. Un procédé tel que revendiqué dans la revendication 1, caractérisé en ce que le courant de gaz contenant de l'azote est de l'air et en ce que la membrane présente une perméabilité élevée vis-à-vis de l'oxygène.

3. Un procédé tel que revendiqué dans la revendication 2, caractérisé en ce que l'augmentation de température dans l'étape d) est au moins en partie produite par combustion d'un carburant à l'aide de l'oxygène contenu dans le courant d'impuretés.

4. Un procédé tel que revendiqué dans un quelconque des revendications précitées, caractérisé en ce que le travail produit dans l'étape e) est utilisé pour contribuer à la compression du courant de gaz dans l'étape a).

5. Un procédé tel que revendiqué dans une quelconque des revendications 1 à 3, caractérisé en ce que le travail produit dans l'étape e) est utilisé pour contribuer à la compression du courant de gaz dans l'étape b).

6. Un procédé tel que revendiqué dans une quelconque des revendications précitées, caractérisé en ce que la différence de pression entre les deux faces de la membrane perméable est comprise entre 1,013 et 10,1325 MPa (10 et 100 atmosphères) et en ce que la pression du perméat séparé dans l'étape b) est d'au moins 0,5066 MPa (5 atmosphères) absolus.

7. Un procédé tel que revendiqué dans une quelconque des revendications précitées, caractérisé en ce que l'étape de compression a) est due à deux compresseurs, mus par une turbine a gaz et mécaniquement distincts.

8. Un procédé tel que revendiqué dans une quelconque des revendications précitées, caractérisé en ce que les traces d'impuretés contenues dans le courant d'azote recupéré sont éliminées à l'aide d'un système de séparation de gaz comprenant un tamis moléculaire.